# EUROPÄISCHE PATENTANMELDUNG

(11) **EP 2 703 215 A2**
(43) Veröffentlichungstag der Anmeldung: **05.03.2014**
(21) Anmeldenummer: 13179179.0
(22) Anmeldetag: 02.08.2013
(51) Int. Cl.: B60P 3/39

(54) **Liegebett für Kraftfahrzeuge**

(30) Priorität: 04.09.2012 DE 102012108218
(71) Anmelder: Reinhardt & Stahl GbR, 82275 Emmering (DE)
(72) Erfinder: Stahl, Tobias, 82275 Emmering (DE)
(74) Vertreter: Lohr, Georg

(57) **Zusammenfassung**

Die vorliegende Erfindung betrifft ein Liegebett, insbesondere zur Verwendung in Verbindung mit den Vordersitzen von Kraftfahrzeugen, wobei das Liegebett (2) aus zwei Liegebettabschnitten gebildet ist. Diese umfassen einen ersten, zur Auflage auf einem Beifahrersitz (20) bestimmten Liegebettabschnitt (4) und einen mit dem ersten über eine gelenkartige Verbindung (6) verbundenen, zwischen einer auf den ersten Liegebettabschnitt (4) zurückgeschwenkten Außerbetriebsstellung und einer auf den Fahrersitz geschwenkten Betriebsstellung schwenkbaren zweiten Liegebettabschnitt (8). Der zweite Liegebettabschnitt (8) umfasst ein aus diesem ausgeschnittenes, separates Segment (26), das in der Betriebsstellung des zweiten Liegebettabschnittes (8) herausnehmbar oder herausschwenkbar ist, und welches so bemessen ist, dass es dabei zumindest einen ein Sitzen auf dem Fahrersitz ermöglichenden Teil des Fahrersitzes freigibt. Auf diese Weise kann der Fahrer den zweiten Liegebettabschnitt in seine Betriebsstellung klappen, während er auf dem Fahrersitz sitzt.

## Beschreibung

### Technisches Gebiet

Die Erfindung betrifft ein Liegebett, insbesondere zur Verwendung in Verbindung mit den Vordersitzen von Kraftfahrzeugen, wobei das Liegebett aus mehreren Liegebettabschnitten gebildet ist.

### Stand der Technik

Es ist allgemein bekannt, dass die Dienstzeiten von Berufskraftfahrern, d.h. Zeiten am Steuer und Ruhezeiten seit langem gesetzlich geregelt sind und mittels Fahrtenschreibern überwacht werden können. Um die vorgeschriebenen Ruhezeiten gewährleisten zu können, sind schwere Lastzüge für den Ferntransport im allgemeinen mit zwei Fahrern besetzt und mit einer Schlafkabine ausgestattet, in der jeweils einer der Fahrer auch während der Fahrt ruhen kann. Ein Problem stellen in dieser Hinsicht kleinere Transporter dar, die im allgemeinen mit nur einem Fahrer besetzt sind, und die nicht genug Platz für eine Schlafkabine bieten, da der Frachtraum sich unmittelbar an den Vordersitzbereich anschließt. Da der Frachtraum im allgemeinen mit Fracht belegt ist, stehen zum Ruhen und Schlafen für den Fahrer nur die in Querrichtung belegbaren Vordersitze zur Verfügung, wobei die für das Sitzen ausgelegten und entsprechend konturierten Sitzflächen der Vordersitze keine brauchbare Ruhe- und insbesondere Schlaffläche bieten. Es sind deshalb auch schon Liegemöbel entwickelt worden, die es ermöglichen sollen, insbesondere die Vordersitze derartiger Fahrzeuge zum Ruhen und Schlafen besser zu nutzen.

Aus der DE 10 2004 021 198 A1 ist ein Liegemöbel für ein Fahrzeug bekannt, bei welchem ein Fahrzeugsitz weitgehend flächenbündig in die Liegefläche des Liegemöbels integriert ist. Dieser Fahrzeugsitz soll u.a. auch ein Fahrersitz sein können. Das Liegemöbel ist mehrteilig ausgebildet, um es bei Nichtgebrauch besser verstauen zu können. Mittel, um das Liegemöbel nach unten abzustützen, sind nicht dargestellt oder beschrieben. Da sich die eigentliche Liegefläche, bezogen auf die Sitzrichtung, von der Sitzfläche aus nach vorne erstreckt, ist diese Lösung jedenfalls für die Vordersitze kaum praktikabel, da der verfügbare Platz nach vorne zum Fußraum hin schon für einen Fahrer mittlerer Größe nicht ausreichen dürfte. Daran ändert sich bei einem Transporter des beschriebenen Typs auch dann nichts, wenn der Sitz verdreh- und/oder verschiebbar ausgebildet ist, da für jede denkbare Stellung des Sitzes der für die Anordnung des Liegemöbels erforderliche Platz beschränkt ist. Ein weiterer Nachteil wird auch darin gesehen, dass die Sitzfläche sich wegen der im allgemeinen vorhandenen Konturierung und Neigung nach hinten kaum in eine horizontale Liegefläche integrieren lässt.

Aus der DE 20 2005 017 881 U1 ist bereits eine Automatratze insbesondere zur Auflage auf zwei hintereinander angeordneten Fahrzeugsitzen bekannt, bei denen die horizontal abgeschwenkte Rücklehne eines Sitzes eine Lücke zwischen den Sitzflächen der beiden Sitze überbrückt. Die Automatratze besteht aus einem Oberteil und aus einem Unterteil, dessen Unterseite entsprechend der Kontur der Fahrzeugsitze profiliert ist. Diese Lösung ist wegen der Notwendigkeit, die Kontur einer ganz bestimmten Sitzkonstellation aufzunehmen und auf die Unterseite des Unterteils zu übertragen, herstellungstechnisch äußerst aufwendig und teuer sowie immer nur für eine ganz bestimmte Sitzkonstellation verwendbar.

Weiter ist aus der DE 10 2004 023 404 A1 eine Sitzliegebank für Wohnmobile oder dergleichen bekannt, bei der an der Rückseite des Rückenlehnenteils eines Fahrzeugsitzes eine aufwendige Struktur angeordnet ist, die nach dem Vorklappen des gesamten Sitzes, wobei die Rückenlehne in eine im wesentlichen horizontale Lage kommt, auseinandergefaltet wird und damit zu einem Liegebett wird, welches nach vorne und nach hinten weit über die Rückenlehne übersteht. Auch diese Lösung ist für ein Fahrzeug des beschriebenen Typs nicht verwendbar, da in diesem insbesondere für den nach hinten überstehenden Teil der ausgeklappten Sitzliegebank kein Platz ist.

Vor diesem Hintergrund liegt der Erfindung die Aufgabe zugrunde, ein Liegebett zur Verwendung in Verbindung mit den Vordersitzen von Kraftfahrzeugen gemäß dem Oberbegriff des Anspruches 1 zu schaffen, welches einfach im Aufbau und in der Handhabung sowie universell verwendbar ist, und welches eine ebene Liegefläche bietet.

Die Lösung dieser Aufgabe ergibt sich aus den Merkmalen des Hauptanspruches, während vorteilhafte Ausgestaltungen und Weiterbildungen der Erfindung den Unteransprüchen entnehmbar sind.

### Darstellung der Erfindung

Der Erfindung liegt die Erkenntnis zugrunde, dass bei einem Kraftfahrzeug des oben beschriebenen Typs mit nur einem Fahrer der Beifahrersitz frei bleibt für die dauernde Unterbringung bzw. Installation eines mehrteiligen Liegebettes im zusammengeklappten Zustand, welcher dann mit einer einzigen Ausklappbewegung in seinen Betriebszustand gebracht werden kann.

Die Erfindung geht demnach von einem Liegebett zur Verwendung in Verbindung mit den Vordersitzen von Kraftfahrzeugen aus, wobei das Liegebett aus mehreren Liegebettabschnitten gebildet ist.

Zur Lösung der gestellten Aufgabe ist dabei vorgesehen, dass das Liegebett einen ersten, zur Auflage auf einem Beifahrersitz bestimmten Liegebettabschnitt und einem zweiten, mit dem ersten über eine gelenkartige Verbindung verbundenen, zwischen einer auf den ersten Liegebettabschnitt zurückgeschwenkten Außerbetriebsstellung und einer auf den Fahrersitz geschwenkten Betriebsstellung schwenkbaren Liegebettabschnitt umfasst.

Der erste Liegebettabschnitt mit dem darauf zurückgeschwenkten zweiten Liegebettabschnitt wird auf dem Beifahrersitz so installiert, dass er in dieser Lage bleiben kann, auch wenn der zweite Liegebettabschnitt ausgeklappt wird, was die Handhabung sehr einfach macht. Für eine kippsichere Installation können Hilfsmittel vorgesehen werden, wie noch im Einzelnen dargelegt wird. Um das Liegebett in seine Betriebsstellung zu bringen, muss lediglich der zweite Liegebettabschnitt auf den Fahrersitz geschwenkt werden.

Beispielsweise kann der erste Liegebettabschnitt den Oberkörper der ruhenden Person aufnehmen, während die Beine auf dem zweiten Liegebettabschnitt liegen. Um den ersten Liegebettabschnitt zu stabilisieren, ist erfindungsgemäß vorgesehen, dass dieser erste Liegebettabschnitt eine auf dem Beifahrersitz aufliegende starre Basisplatte und eine auf dieser angeordnete Matratzenauflage umfasst. Die Basisplatte stellt sicher, dass die Matratzenauflage auf ihrer ganzen Fläche sicher abgestützt wird und das Gewicht des darauf ruhenden Oberkörpers sicher abfängt.

Gemäß der Erfindung kann der zweite Liegebettabschnitt einen ähnlichen Aufbau haben, wobei auch der zweite Liegebettabschnitt eine in der Betriebsstellung auf dem Fahrersitz aufliegende Basisplatte und eine auf dieser angeordnete Matratzenauflage umfasst.

Es hat sich jedoch gezeigt, dass es auch genügt, dass gemäß einer anderen Ausgestaltung der Erfindung der zweite Liegebettabschnitt nur aus einer in der Betriebsstellung direkt auf dem Fahrersitz aufliegenden Matratzenauflage besteht, da diese durch die Beine weit weniger belastet wird, als der erste Liegebettabschnitt.

Die gelenkartige Verbindung zwischen den Liegebettabschnitten kann gemäß einer weiteren Ausgestaltung der Erfindung aus einem in Breitenrichtung der Liegebettabschnitte verlaufenden Band aus einem flexiblen Material bestehen. Vorzugsweise ist das flexible Band einstückig mit die Matratzenauflagen aufnehmenden Hüllen aus einem Textilmaterial oder dergleichen ausgebildet.

Um den ersten Liegebettabschnitt und damit das gesamte Liegebett gegen Kippen um die Längsachse zu sichern, ist gemäß einer weiteren Ausgestaltung der Erfindung vorgesehen, dass an der Unterseite zumindest der Basisplatte des ersten Liegebettabschnittes ein Stützfuß zur Abstützung desselben am Fahrzeugboden angeordnet ist, wie anhand eines Ausführungsbeispieles näher dargelegt wird.

Der Stützfuß ist vorzugsweise teleskopartig längenverstellbar, um ihn an unterschiedliche Sitzhöhen anpassen zu können.

Alternativ oder auch zusätzlich zu dem Stützfuß kann das Liegebett wenigstens ein zugkraftaufnehmendes Mittel, wie beispielsweise ein Gurt, ein Seil, ein Band, eine Schnur oder dgl. aufweisen. Nachfolgend wird der Begriff Gurt als pars pro toto für alle zugkraftaufnehmenden Mittel verwendet. Dieser Gurt ist bevorzugt derart an dem Liegebett, z.B. an der Basisplatte befestigt, dass er an der vorderen oder einer seitlichen Schmalseite des ausgefalteten Liegebetts vorbei zu einem Befestigungspunkt der Führerkabine geführt und dort vorzugsweise lösbar angeschlagen werden kann. Beispielsweise kann der Gurt an der Unterseite oder einer Schmalseite der Basisplatte an dem Liegebett angeschlagen sein. Wenn der Gurt an wenigstens einer der seitlichen Kanten des Liegebetts vorbeigeführt wird, sollte er vorzugsweise im vorderen Bereich der entsprechenden Seite nach oben geführt werden. Es kommt nicht darauf an, wo der Gurt am Liegebett angeschlagen ist, er sollte lediglich so befestigt sein, dass nach unten wirkende Kraft zuverlässig aufnehmen kann. Beispielsweise kann der Gurt auch an einer der Schmalseiten des Liegebetts befestigt sein.

Beispielsweise kann der Gurt an wenigstens einem der üblicherweise oberhalb der Türen angeordneten Handgriffe oder einem oft im Bereich der Kabinenrückwand angeordnetem Haken befestigt werden, so dass der Gurt ein Abkippen des Liegebettes bei Belastung der in Fahrtrichtung weisenden Kante zuverlässig verhindert. Zur Anpassung an die jeweiligen Gegebenheiten ist der Gurt vorzugsweise längenverstellbar.

Durch den Gurt kann der Stützfuß entfallen, wodurch der Beifahrerfußraum frei bleibt und für persönliches Gepäck wird.

Vorzugsweise ist an den Gurt eine zu dem Gurtschloss eines der Beifahrersitze komplementäre Steckzunge. Dann kann der Gurt nach dem zusammenfalteten des Liegebetts über dieses hinweg in das Gurtschloss eingesteckt und vorzugsweise gestrafft werden. Dadurch wird das Liegebett während der Fahrt zuverlässig auf dem Beifahrersitz fixiert.

Um die Handhabung des Liegebettes durch den Fahrer weiter zu erleichtern und um insbesondere eine Möglichkeit zu bieten, das Liegebett in seine Betriebsposition zu bringen, ohne dass dieser aus dem Fahrzeug aussteigen muss, ist gemäß einer weiteren Ausgestaltung der Erfindung vorgesehen, dass der zweite Liegebettabschnitt ein aus diesem ausgeschnittenes, separates Segment umfasst, das für das Verschwenken in die Betriebsstellung des zweiten Liegebettabschnittes herausnehmbar oder herausschwenkbar ist, und das so bemessen ist, dass es zumindest einen ein Sitzen auf dem Fahrersitz ermöglichenden Teil des Fahrersitzes frei lässt. Auf diese Weise kann der Fahrer den zweiten Liegebettabschnitt in die Betriebsposition bringen, während er auf dem Fahrersitz sitzt, indem er gleichzeitig das separate Segment herausnimmt oder herausschwenkt. Wenn der Fahrer sich danach auf den schon bestehenden Teil der Liegefläche begibt, also danach den Fahrersitz verlässt, kann er dieses Segment wieder an Ort und Stelle verbringen.

Eine weitere Ausgestaltung der Erfindung sieht vor, dass an den Liegebettabschnitten Mittel vorgesehen sind, welche ein Fixieren der Liegebettabschnitte aneinander in der Außerbetriebsstellung des Liegebettes ermöglichen.

### Beschreibung der Zeichnungen

Ein Ausführungsbeispiel der Erfindung ist in der Zeichnung dargestellt und wird im Folgenden näher beschrieben. Es zeigen:
- Fig. 1: in einer perspektivischen Darstellung ein Liegebett in einer Betriebsstellung; und
- Fig. 2: in einer perspektivischen Darstellung ein Liegebett etwa gemäß der Fig. 1 in einer Außerbetriebsstellung.

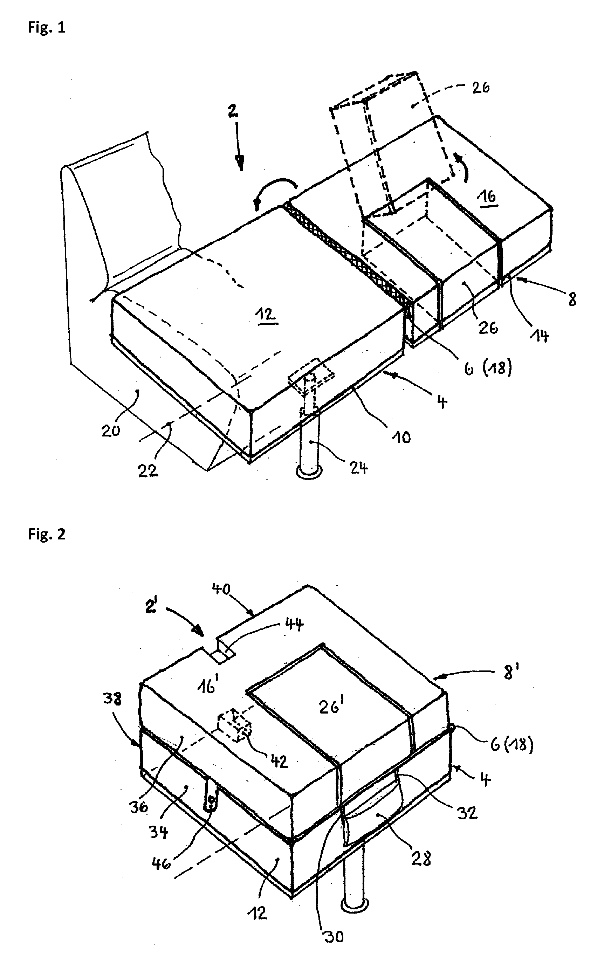

Das in der Fig. 1 in seiner Betriebsstellung dargestellte, als Ganzes mit 2 bezeichnete Liegebett umfasst einen ersten Liegebettabschnitt 2 und einen mit diesem über eine gelenkartige Verbindung 6 verbundenen zweiten Liegebettabschnitt 8.

Der erste Liegebettabschnitt 4 besteht aus einer Basisplatte 10 und einer auf dieser angeordneten Matratzenauflage 12. Der zweite Liegebettabschnitt 8 besteht in dem in Fig. 1 dargestellten Ausführungsbeispiel ebenfalls aus einer Basisplatte 14 und einer darauf angeordneten Matratzenauflage 16. Die Basisplatte 14 kann unter Umständen entfallen, wie am Beispiel der Fig. 2 dargestellt ist. Die gelenkartige Verbindung 6 zwischen den Liegebettabschnitten 4 und 8 besteht aus einem in Breitenrichtung der Liegebettabschnitte verlaufenden Band 18 aus einem flexiblen Material und ist vorzugsweise einstückig mit die Matratzenauflagen 12, 16 aufnehmenden Hüllen aus einem Textilmaterial oder dergleichen ausgebildet.

Der erste Liegebettabschnitt 4 liegt mit seiner Basisplatte 10 auf einem schematisch angedeuteten Beifahrersitz 20 auf. Um gegebenenfalls ein Kippen um eine vordere Abstützlinie 22 des Beifahrersitzes 20 nach vorne zu verhindern, ist an der Unterseite der Basisplatte 10 ein Stützfuß 24 zur Abstützung am Fahrzeugboden angeordnet. Der Stützfuß 24 ist vorzugsweise teleskopartig längenverstellbar, um ihn an unterschiedliche Höhen anpassen zu können.

Der zweite Liegebettabschnitt 8 liegt mit seiner Basisplatte 14 auf einem nicht dargestellten Fahrersitz auf und bildet mit dem ersten Liegebettabschnitt 4 eine ebene Liegefläche. Bei der in Fig. 1 dargestellten Ausgestaltung des zweiten Liegebettabschnittes 8 weist dieser ein ausgeschnittenes, separates Segment 26 auf, welches nach oben herausschwenkbar ist (gestrichelt dargestellt). Dieses Segment 26 ist so bemessen, dass es im herausgeschwenkten Zustand zumindest einen ein Sitzes auf dem Fahrersitz ermöglichenden Teil dieses Fahrersitzes freigibt. Wenn ein Fahrer das Liegebett aus der in Fig. 2 dargestellten Außerbetriebsstellung in die in Fig. 1 dargestellte Betriebsstellung verschwenken will, ohne den Fahrersitz zu verlassen, dann kann er beim Herunterklappen des zweiten Liegebettabschnittes 8 das Segment 26 nach oben schwenken und so einen Ausschnitt herstellen, der es ihm ermöglicht, auf dem Fahrersitz sitzen zu bleiben. Nachdem er den Fahrersitz verlassen hat, kann er das Segment 26 wieder nach unten schwenken und den Ausschnitt schließen. Es sei hier bemerkt, dass gemäß einer alternativen Ausgestaltung das Segment aus dem zugeordneten Ausschnitt herausnehmbar sein kann, wie nicht im einzelnen dargestellt ist.

Fig. 2 zeigt das auf dem nicht dargestellten Beifahrersitz liegende Liegebett 2' in seiner Außerbetriebsstellung, wobei der zweite Liegebettabschnitt 8' auf den ersten Liegebettabschnitt 4 zurückgeschwenkt ist, womit der Fahrersitz vollständig für den Fahrbetrieb freigegeben ist. Der Liegebettabschnitt 8 (und das zugeordnete Segment 26') weist in dem in Fig. 2 dargestellten Ausführungsbeispiel keine Basisplatte auf. Diese kann dann entbehrlich sein, wenn der Oberkörper des ruhenden Fahrers auf dem ersten Liegebettabschnitt ruht und der zweite Liegebettabschnitt lediglich die Beine aufnehmen muss, wie schon dargelegt wurde.

An der vorderen Stirnseite des ersten Liegebettabschnittes 4 ist vorzugsweise eine Tasche 28 angeordnet, in der der Fahrer wichtige Utensilien unterbringen kann, auf die er gegebenenfalls nachts schnell zugreifen muss. Die Tasche 28 hängt beispielsweise an zwei Bändern 30, 32, die es erlauben, die leere Tasche 28 zwischen den Matratzenauflagen 12, 16 zu verstauen.

An den seitlichen Stirnflächen 34, 36 der Liegebettabschnitte 4, 8' sind geeignete Mittel 46, beispielsweise Lasche und Knopf, zum Fixieren derselben in ihrer Außerbetriebsstellung vorgesehen.

An den hinteren Stirnseiten 38 und 40 der Liegebettabschnitte 4, 8' sind gegebenenfalls Ausschnitte 42 bzw. 44 ausgebildet, welche Gurtbeschläge des Beifahrersitzes bzw. des Fahrersitzes aufnehmen können.

### Bezugszeichenliste

- 2: Liegebett
- 2': Liegebett
- 4: erster Liegebettabschnitt
- 6: gelenkartige Verbindung
- 8: zweiter Liegebettabschnitt
- 8': zweiter Liegebettabschnitt
- 10: Basisplatte
- 12: Matratzenauflage
- 14: Basisplatte
- 16: Matratzenauflage
- 16': Matratzenauflage
- 18: Band
- 20: Beifahrersitz
- 22: Abstützlinie
- 24: Stützfuß
- 26: Segment
- 26': Segment
- 28: Tasche
- 30: Band
- 32: Band
- 34: Stirnseite
- 36: Stirnseite
- 38: Stirnseite
- 40: Stirnseite
- 42: Ausschnitt
- 44: Ausschnitt
- 46: Mittel zum Fixieren

## Patentansprüche

1. Liegebett, insbesondere zur Verwendung in Verbindung mit den Vordersitzen von Kraftfahrzeugen, wobei das Liegebett aus mehreren Liegebettabschnitten gebildet ist, **gekennzeichnet durch**
einen ersten, zur Auflage auf einem Beifahrersitz (20) bestimmten Liegebettabschnitt (4) und einen mit dem ersten über eine gelenkartige Verbindung (6) verbundenen, zwischen einer auf den ersten Liegebettabschnitt (4) zurückgeschwenkten Außerbetriebsstellung und einer auf den Fahrersitz geschwenkten Betriebsstellung schwenkbaren zweiten Liegebettabschnitt (8).

2. Liegebett nach Anspruch 1,
**dadurch gekennzeichnet, dass**
der erste Liegebettabschnitt (4) eine auf dem Beifahrersitz (20) aufliegende starre Basisplatte (10) und eine auf dieser angeordnete Matratzenauflage (12) umfasst.

3. Liegebett nach Anspruch 1 oder 2,
**dadurch gekennzeichnet, dass**
der zweite Liegebettabschnitt (8) eine in der Betriebsstellung auf dem Fahrersitz aufliegende Basisplatte (14) und eine auf dieser angeordnete Matratzenauflage (16, 16') umfasst.

4. Liegebett nach Anspruch 1 oder 2,
**dadurch gekennzeichnet, dass**
der zweite Liegebettabschnitt (8, 8') aus einer in der Betriebsstellung direkt auf dem Fahrersitz aufliegenden Matratzenauflage (16, 16') besteht.

5. Liegebett nach einem der Ansprüche 1 bis 4,
**dadurch gekennzeichnet, dass**
die gelenkartige Verbindung (6) zwischen den Liegebettabschnitten (4, 8, 8') aus einem in Breitenrichtung der Liegebettabschnitte verlaufenden Band (18) aus einem flexiblen Material besteht.

6. Liegebett nach Anspruch 5,
**dadurch gekennzeichnet, dass**
das flexible Band (18) einstückig mit die Matratzenauflagen (12, 16, 16') aufnehmenden Hüllen aus einem Textilmaterial oder dergleichen ausgebildet ist.

7. Liegebett nach einem der Ansprüche 1 bis 6,
**dadurch gekennzeichnet, dass**
an der Unterseite zumindest der Basisplatte (10) des ersten Liegebettabschnittes (4) ein Stützfuß (24) zur Abstützung desselben am Fahrzeugboden angeordnet ist.

8. Liegebett nach Anspruch 7,
**dadurch gekennzeichnet, dass**
der Stützfuß (24) teleskopartig längenverstellbar ist.

9. Liegebett nach einem der Ansprüche 1 bis 8,
**dadurch gekennzeichnet, dass**
das Liegebett wenigstens ein zugkraftaufnehmendes Mittel hat, welches bevorzugt derart an der dem Liegebett befestigt ist, dass es an der Vorderen oder einer seitlichen Schmalseite vorbei zu einem Befestigungspunkt einer Fahrerkabine des Kraftfahrzeugs geführt und dort lösbar angeschlagen werden kann.

10. Liegebett nach einem der Ansprüche 1 bis 9,
**dadurch gekennzeichnet, dass**
der zweite Liegebettabschnitt (8, 8') ein aus diesem ausgeschnittenes, separates Segment (26) umfasst, das in der Betriebsstellung des Liegebettes (2, 2') aus der Ebene des zweiten Liegebettabschnittes (8, 8') herausnehmbar oder herausschwenkbar ist, und welches so bemessen ist, dass es dabei zumindest einen ein Sitzen auf dem Fahrersitz ermöglichenden Teil des Fahrersitzes freigibt.

11. Liegebett nach einem der Ansprüche 1 bis 10,
**dadurch gekennzeichnet, dass**
an den Liegebettabschnitten (4, 8') Mittel (46) zum Fixieren derselben in ihrer Außerbetriebsstellung vorgesehen sind.
